# NEUE EUROPÄISCHE PATENTSCHRIFT

(11) **EP 1 076 989 B2**
(45) Veröffentlichungstag und Bekanntmachung des Hinweises auf die Entscheidung über den Einspruch: **30.11.2011**
(45) Hinweis auf die Patenterteilung: 25.06.2003
(21) Anmeldenummer: 99932658.0
(22) Anmeldetag: 04.05.1999
(51) Int. Cl.: H04W 24/00

(54) **ERMITTLUNG DER DIENSTGÜTE VON TELEKOMMUNIKATIONSDIENSTEN**
DETERMINING THE QUALITY OF TELECOMMUNICATION SERVICES
DETERMINATION DE LA QUALITE DE SERVICES DE TELECOMMUNICATION

(30) Priorität: 05.05.1998 DE 19820845
(43) Veröffentlichungstag der Anmeldung: 21.02.2001
(73) Patentinhaber: Vodafone Holding GmbH, 40213 Düsseldorf (DE)
(72) Erfinder: WEBER, Bernhard, D-40593 Düsseldorf (DE)
(74) Vertreter: Kreutzer, Ulrich
(86) Internationale Anmeldenummer: PCT/DE1999/001383
(87) Internationale Veröffentlichungsnummer: WO 1999/057823

(56) Entgegenhaltungen:
- EP-A- 0 544 635
- EP-A1- 0 619 687
- WO-A1-94/28683
- WO-A1-97/23109
- WO-A1-98/32265
- WO-A2-95/33352
- DE-A1- 4 442 613
- US-A- 5 644 623
- US-A- 5 694 451
- PATENT ABSTRACTS OF JAPAN vol. 1998, no. 06, 30. April 1998 (1998-04-30) & JP 10 051445 A (CANON INC), 20. Februar 1998 (1998-02-20)

## Beschreibung

Die Erfindung betrifft ein Verfahren zur Ermittlung der Dienstgüte von Telekommunikationsdiensten in einem Kommunikationsnetz.

Ein derartiges Kommunikationsnetz ist insbesondere ein Telekommunikationsnetz, beispielsweise ein Festnetz und/oder ein Mobilfunknetz.

Die Dienstgüte, welche auch als "quality of service" bezeichnet wird, ist ein gängiger abstrakter Betriff, welcher Parameter, Erscheinungen, Wirkungen, Eindrücke etc. zusammenfaßt, welche (in der Regel gemeinsam) den Grad der Zufriedenheit eines Telekommunikationsdienst-Kunden in einem Kommunikationsnetz bestimmen.

Die Dienstgüte wird durch objektive und subjektive Parameter beeinflußt. Zur Ermittlung der (subjektiv) erfahrenen Dienstgüte durch den Betreiber eines Kommunikationsnetzes besteht die Möglichkeit der Erfragung der erfahrenen Dienstgüte von Testkunden, welche die Dienste in Anspruch nehmen und bewerten. Nachteilig ist hierbei, daß die Bewertung bei vertretbarem Aufwand in der Regel nicht für einzelne vom Kunden bezahlte Dienstinanspruchnahmen, sondern pauschal erfolgt und daß das Verhalten und die Bewertung der Testkunden nur bedingt repräsentativ für den Kundenquerschnitt eines Kommunikationsnetz-Betreibers ist, sowie ein relativ hoher Aufwand bei statistisch relevanter Durchführung.

Ferner ist die Bestimmung der erfahrenen Dienstgüte durch Kundenumfragen möglich, wobei ebenfalls nicht die Erfassung einzelner, vom Kunden bezahlter Dienstinanspruchnahmen bewertet wird, der Aufwand zur Durchführung ebenfalls relativ groß ist und überdies die Gefahr der negativen Beeinflussung der Kundenzufriedenheit durch die Umfrage besteht.

Die Schrift US-A-5,694,451 zeigt ein Verfahren zum "Performance Monitoring" in einem Telekommunikationsnetz. Es werden Informationen über die "Netz-Performance" am Endgerät oder in Verbindung mit dem Endgerät gesammelt und an ein O&M-System übertragen.
Die erfassten Informationen umfassen Daten bezüglich des "grade of Service", der Fehler beim Verbindungsaufbau und -abbau sowie der Qualität der Verbindung.
Der vorliegenden Anmeldung lag die Aufgabe zugrunde, ein Verfahren zur Ermittlung der Dienstgüte anzugeben, welches eine umfassendere und vollständigere Ermittlung der Dienstgüte als der bekannte Stand der Technik ermöglicht.
Die Aufgabe wird durch die Gegenstände der unabhängigen Ansprüche gelöst.
Die abhängigen Ansprüche gestalten die erfindungsgemäße Lösung weiter aus.

Die Erfindung vermeidet die Nachteile der obigen bekannten Methoden zur Bestimmung der "erfahrenen Dienstgüte". Durch die endgeratseitige Erfassung der Dienstgüte wird eine sehr aussagekräftige Beurteilung der endgerätseitig und damit dem Kunden zur Verfügung stehenden Dienstqualität ermöglicht. Systematische Fehler bei der Erfassung der Dienstgüte können damit vermieden werden. Femer ist hierdurch ein umfassendes Bild der von Kunden (subjektiv) "erfahrenen Dienstgüte" möglich, was genauer ist als eine Stichprobe oder Kundenumfrage. Femer ist eine sowohl kontinuierliche als auch flächendeckende Dienstgüte-Überwachung möglich. Systematische Fehler bei der Erfassung der Dienstgüte sind bei endgerätseitiger Erfassung der subjektiv vom Endgerätnutzer "erfahrenen Dienstgüte" ausgeschlossen.

Zur Erfassung der Dienstgüte ist diese am Endgerät vom Endgerätnutzer eingebbar. Darüber hinaus kann sie vom Endgerät vom Benutzer in vorgegebener Form (beispielsweise in einem Menüpunkt und/oder mit Auswahltasten etc.) abgefragt werden.

Die vom Endgerätnutzer eingegebene Dienstgüte wird im folgenden als "erfahrene Dienstgüte" bezeichnet und ist die Dienstgüte, welche vom Kunden bei der Inanspruchnahme eines Telekommunikationsdienstes im Kommunikationsnetz tatsächlich subjektiv empfunden wird.

Erfindungsgemäß erhält die Zentrale (des Diensteanbieters oder Kommunikationsnetzbetreibers) eine aussagekräftige Aussage über den Grad der Zufriedenheit eines Kunden mit der jeweiligen Inanspruchnahme eines einzelnen Dienstes. Durch die Abfrage der subjektiven Eindrücke des Kunden wird ein hoher Grad an Aussagekraft der erfahrenen Dienstgüte erreicht. Der Diensteanbieter (der der Anbieter eines einzelnen Dienstes oder der Kommunikationsnetzbetreiber sein kann) erhält ein umfassendes Bild der von einem Kunden subjektiv erfahrenen Dienstgüte, was wesentlich aussagekräftiger als Stichproben oder Kundenumfragen ist. Femer ist eine kontinuierliche und flächendeckende Beurteilung der erfahrenen Dienstgüte möglich. Durch die sehr differenzierten Aussagen über die nach dieser Ausgestaltung der Erfindung bestimmte "erfahrene Dienstgüte" kann der Diensteanbieter mit sehr differenzierten Maßnahmen auf Abweichungen von der erwünschten Kundenzufriedenheit frühzeitig reagieren, wodurch vermieden wird, daß Kunden so unzufrieden werden, daß sie ihre Unzufriedenheit an weitere potentielle Kunden kommunzieren, ihr Kundenverhältnis kündigen oder sich beschweren.

Bei der Auswahl der Maßnahmen eines Diensteanbieters im Falle festgestellter unzureichender "erfahrener Dienstgüte" kann ein Vergleich der "erfahrenen Dienstgüte" mit einer vom Endgerät selbst ermittelten Dienstgüte für die Auswahl geeigneter Maßnahmen, eventuell auch im Zusammenhang mit Erfahrungswerten, hilfreich sein.

Da die "erfahrene Dienstgüte" mit denselben Geräten erfaßt wird, die auch die Dienstleistung erbringen, sind keine zusätzlichen Dienstgüte-Beurteilungs-Geräte erforderlich, so daß die Erfassung der erfahrenen Dienstgüte erfindungsgemäß wesentlich kostengünstiger als bei anderen Lösungen möglich ist.

Hardwareseitig ist die Erfindung in Endgeräten und Kommunikationsnetzen realisierbar.

Weitere Merkmale und Vorteile der Erfindung ergeben sich aus den weiteren Unteransprüchen sowie der nachfolgenden Beschreibung eines Ausführungsbeispiels anhand der Zeichnung. Dabei zeigt:

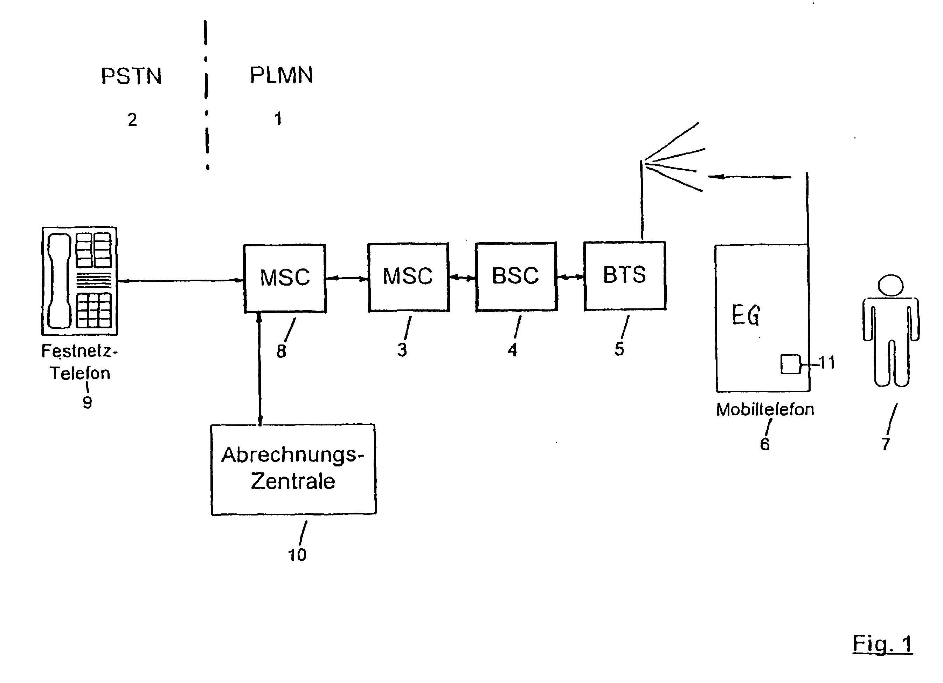

- Fig. 1: eine grobe Übersicht über Teile eines Kommunikationsnetzes.

Der Ausschnitt eines Kommunikationsnetzes in Figur 1 umfaßt ein Mobilfunknetz 1 (beispielsweise ein GSM-Netz) sowie ein Festnetz 2.

Unter den beispielhaft dargestellten (nicht vollständigen) Elementen des Mobilfunknetzes 1 ist die MSC 3 ein Mobile Services Switching Center, also eine Schaltzentrale eines Mobilfunknetzes, die BSC 4 eine Basisstationssteuerung (= Base Station Controller), die BTS 5 eine Sende-/Empfangsstation (eine Base Tranceiver Station) und das EG 6 ein Endgerät, welches von einem Endgerätnutzer 7 benutzt wird. Vom Mobilfunknetz 1 geht über ein MSC 8 (gateway MSC etc.) eine Verbindung über ein Festnetz 2 (PSTN) zu einem weiteren Endgerät 9 im Festnetz. Die Erfassung und Ermittlung von Dienstgütedaten ist im Festnetz 2 und im Mobilfunknetz 1 möglich. Wegen der funkübertragungsbedingten Übertragungsprobleme ist die Überwachung insbesondere für das Mobilfunknetz von Bedeutung.

Die (subjektiv) erfahrene (und manuell eingegebene) Dienstgüte kann insbesondere die Qualität eines Gesprächs zwischen zwei Endgeräten 6, 9 betreffen, von denen keines, eines oder beide in einem Mobilfunknetz und entsprechend beide, eins oder keines in einem Festnetz angeschlossen sein können.

Die "erfahrene Dienstgüte" kann ein Endgerätnutzer 7 einer Dienstgüte-Überprüfungs-Zentrale 10 (im folgenden kurz "Zentrale" genannt) beispielsweise durch Angabe eines oder mehrerer der Dienstgüteparameter Netzzugänglichkeit, Dienstzugänglichkeit, Sprachqualität, Gesprächsabbruchs-Wahrscheinlichkeit mitteilen.

Dabei erfaßt die Netzzugänglichkeit beispeilsweise die (subjektive) Beurteilung des Endgerätnutzers der zeitlichen/oder räumlichen Homogenität des Angebots des Telefondienstes durch den Diensteanbieter; die Netzzugänglichkeit wird in einem Mobilfunknetz mit einer Funkschnittstelle wesentlich durch die Qualität der Funkversorgung bestimmt.

Die Dienstzugänglichkeit betrifft die (subjektive) Zufriedenheit des Kunden mit dem Aufbau einer von ihm angeforderten Telefonverbindung.

Die Sprachqualität repräsentiert die (subjektive) Beurteilung der Qualität der übertragenen Sprache in bezug auf Verständlichkeit, Sprechererkennung, Störgeräusche usw.

Die Gesprächsabbruch-Wahrscheinlichkeit repräsentiert die (subjektive) Zufriedenheit des Endgerätnutzers 7 mit der Wahrscheinlichkeit ungewollter Gesprächsabbrüche.

Obige Parameter (Netzzugänglichkeit, Dienstzugänglichkeit, Sprachqualität, Gesprächsabbruch-Wahrscheinlichkeit) für die Dienstgüte sind beispielhaft für die Dienstgüteerfassung (also für die subjektive Beurteilung der Dienstgüte durch eine Tasteneingabe, akustische Eingabe etc. eines Kunden am Endgerät) erläutert. Hierdurch kann ein Beurteilungskriterium für die Dienstgüte geschaffen werden, welches allein oder kombiniert mit genannten objektiven Dienstgüteparametern die Auswahl von geeigneten Maßnahmen im Netz optimiert (wie die Schaffung von mehr Kanälen, stärkeren Sendeleistungen, zusätzlichen BTS etc.).

Neben obigen Parametern, welche sich insbesondere auf die Qualität von Sprach-Telekommunikationsdiensten in einem Kommunikationsnetz beziehen, kann die (subjektive) erfahrene Dienstgüte auch bezogen auf Datendienste (alphanumerische Dienste etc.) bestimmt werden; hier kann insbesondere die effektive Übertragungsgeschwindigkeit und die Bit-Fehlerrate bestimmt, insbesondere (objektiv) ermittelt werden.

Im vorliegenden Beispiel in Figur 1 kann am Endgerät 6 und/oder am Endgerät 9 die (subjektiv) "erfahrene" (und durch Tastatur, akustisch etc. eingegebene) Dienstgüte bestimmt werden.

Zur Ermittlung der "erfahrenen Dienstgüte" kann beispielsweise eine Taste 11 am Endgerät 6 vorgesehen sein, welche eine binäre Eingabe einer Unzufriedenheit mit einem Dienst ermöglicht. Darüber hinaus kann auch eine mehr als binär quantisierte Eingabe, z.B. durch Drücken einer Zahlen-Taste nach der Taste 11, durch Eingaben in einem Menü etc. erfolgen.
Die Übertragung der (z.B. akustisch oder über eine Taste 11 eingegebenen) "erfahrenen Dienstgüte" von einem Endgerät zu einer Zentrale 10 kann über unterschiedlichste Kommunikationskanäle erfolgen. Insbesondere können hierfür Signalisierungskanäle, evt. auch speziell hierfür ausgebildete Signalisierungskanäle verwendet werden. Beispielsweise kann eine Kurznachricht (z. B. GSM-SMS) vom Endgerät an eine Zentrale 10 gesandt werden.

In einer Zentrale 10 können "erfahrene" Dienstgüte-Daten weiterverarbeitet werden. Insbesondere können die "erfahrenen" und die ermittelte Dienstgüte (wenn sie nicht schon endgerätseitig zusammengefaßt wurden) bezogen auf einen Telekommunikationsdienst-Vorgang in der Zentrale 10 zusammengefaßt und gemeinsam ausgewertet werden. Auch ist eine Zusammenfassung von Dienstgüte-Daten eines Benutzers möglich. Femer ist eine Zusammenfassung von sich auf bestimmte Übertragungswege und/oder Übertragungselemente im Kommunikationsnetz beziehenden Dienstgüte-Daten möglich, um die Notwendigkeit von netzseitigen Maßnahmen (stärkere Sendeleistung, zusätzliche BTS, zusätzliche Kanäle etc.) beurteilen zu können.

Eine Dienstinanspruchnahme kann z.B. ein Telefongespräch, der Abruf von Informationen etc sein. Ein Dienstinanspruchnahmeversuch kann z.B. ein (durch Wählen einer Telefonnummer etc.) versuchter (erfolgreicher oder erfolgloser) Telefonanruf, der Versuch des Einbuchens eines Mobiltelefons 6 in ein Mobilfunknetz sein.

## Patentansprüche

1. Verfahren zur Ermittlung der Dienstgüte von Telekommunikationsdiensten in einem Kommunikationsnetz (1;2),
**dadurch gekennzeichnet,**
- **daß** an einem zur Kommunikation im Kommunikationsnetz ausgebildeten Endgerät (6;9) für jeweils eine Dienstinanspruchnahme und/oder für jeweils einen Dienstinanspruchnahme-Versuch
-- die Netzzugänglichkeit des Kommunikationsnetzes,
-- die Dienstzugänglichkeit des ausgewählten Dienstes,
-- die Sprachqualität und
-- die Gesprächsabbruchwahrscheinlichkeit
beurteilt werden und
- **daß** die Qualität dieser Dienstgüteparameter repräsentierende, vom Endgerätenutzer subjektiv ermittelte Dienstgütedaten am Endgerät eingegeben und an eine Zentrale (10) des Kommunikationsnetzes (1 ;2) übermittelt werden.

2. Verfahren nach Anspruch 1,
**dadurch gekennzeichnet,**
**daß** das Kommunikationsnetz ein Mobilfunknetz ist und daß das Endgerät ein Mobilfunkgerät ist.

3. Verfahren nach einem der vorhergehenden Ansprüche,
**dadurch gekennzeichnet,**
**daß** eine Dienstinanspruchnahme eine Kommunikation, insbesondere ein Telefongespräch, über das Kommunikationsnetz beinhaltet.

4. Verfahren nach einem der vorhergehenden Ansprüche,
**dadurch gekennzeichnet,**
**daß** die Übermittlung von Dienstgütedaten über einen speziellen Kommunikationskanal erfolgt.

5. Verfahren nach einem der vorhergehenden Ansprüche,
**dadurch gekennzeichnet,**
**daß** die Übermittlung per Kurznachricht, insbesondere GSM-SMS, erfolgt.

6. Verfahren nach einem der vorhergehenden Ansprüche,
**dadurch gekennzeichnet,**
**daß** übermittelte Dienstgütedaten in einer Zentrale erfaßt und ausgewertet werden.

7. Verfahren nach einem der vorhergehenden Ansprüche,
**dadurch gekennzeichnet,**
**daß** Dienstgütedaten binär oder höher als binär quantisiert sind.

8. Verfahren nach einem der vorhergehenden Ansprüche,
**dadurch gekennzeichnet,**
**daß** sich auf jeweils ein Endgerät beziehende Dienstgütedaten in einer Zentrale zusammengestellt werden.

9. Verfahren nach einem der vorhergehenden Ansprüche,
**dadurch gekennzeichnet,**
**daß** die sich auf einen Teil des Kommunikationsnetzes beziehenden Dienstgütedaten jeweils zusammen ausgewertet werden.

10. Verfahren nach einem der vorhergehenden Ansprüche,
**dadurch gekennzeichnet,**
**daß**, wenn die Übermittlung abgefragter Dienstgütedaten an eine Zentrale, insbesondere aufgrund einer Kommunikationsstörung, aktuell nicht möglich ist, diese im Endgerät oder im Kommunikationsnetz gespeichert werden und übertragen werden, wenn ihre Übertragung möglich ist.

11. Verfahren nach einem der vorhergehenden Ansprüche,
**dadurch gekennzeichnet,**
**daß** die Abfrage ermittelter Dienstgütedaten oder darauf basierender Daten aus dem Endgerät und/oder aus der Zentrale für den Endgerät-Nutzer ermöglicht wird.

12. Verfahren nach einem der vorhergehenden Ansprüche,
**dadurch gekennzeichnet,**
**daß** das endgeräteseitige Erfassen von Dienstgütedaten **dadurch** erfolgt, daß das Endgerät selbst und/oder Komponenten des Kommunikationsnetzes technisch objektiv die Dienstgütedaten ermitteln.

13. Verfahren nach einem der vorhergehenden Ansprüche,
**dadurch gekennzeichnet,**
**daß** das Endgerät und/oder Kommunikationsnetzkomponenten während einer Kommunikation des Endgerätes über das Kommunikationsnetz Prozesse im Endgerät und/oder im Kommunikationsnetz erfassen.

14. Verfahren nach einem der vorhergehenden Ansprüche,
**dadurch gekennzeichnet,**
**daß** Dienstgütedaten nach einer Kommunikation übermittelt werden.

15. Verfahren nach einem der vorhergehenden Ansprüche,
**dadurch gekennzeichnet,**
**daß** Dienstgütedaten zusammen mit Abrechnungsdaten weiterbearbeitet werden.

16. Verfahren nach einem der vorhergehenden Ansprüche,
**dadurch gekennzeichnet,**
**daß** Dienstgütedaten oder aufgrund von ihnen ermittelte Daten bei der Berechnung von Telekommunikationsgebühren berücksichtigt werden.

17. Endgerät zur Kommunikation in einem Kommunikationsnetzwerk,
**dadurch gekennzeichnet,**
**daß** es ein Programm zur Durchführung des Verfahrens nach einem der voranstehenden Ansprüche, einen Speicher für das Programm und einen Prozessor zum Abarbeiten des Programmes aufweist.

18. Endgerät nach Anspruch 17,
**dadurch gekennzeichnet,**
**daß** es ein Mobilfunkgerät, insbesondere GSM-Gerät ist.

19. Endgerät nach Anspruch 17,
**dadurch gekennzeichnet,**
**daß** es eine spezielle Taste zur Eingabe der abgefragten Dienstgüte aufweist.

## Claims

1. A method of determining the quality of telecommunications services in a communications network (1; 2),
**characterized in**
- **that** at a terminal device (6; 9) designed for communication within the network for each instance of service utilisation and/or for each attempted utilisation an assessment of
-- the network accessibility of the communications network,
-- the accessibility of the service selected,
-- the voice quality, and
-- the likelihood of the call being disconnected
is made; and
- **that** subjectively determined service quality data representative of the quality of these service parameters are being entered into the terminal device and transmitted to a central control unit (10) of the communications network (1; 2).

2. The method as in claim 1,
**characterized in that** the communications network is a mobile telephony network, and the terminal device is a mobile phone.

3. The method as in one of the preceding claims,
**characterized in that** a service utilisation consists of a communication, particularly a telephone call, via the communications network.

4. The method as in one of the preceding claims,
**characterized in that** the transmission of service quality data is made via a special communications channel.

5. The method as in one of the preceding claims,
**characterized in that** transmission is effected by short message, particularly GSM SMS.

6. The method as in one of the preceding claims,
**characterized in that** transmitted service quality data are captured and evaluated in a central control unit.

7. The method as in one of the preceding claims,
**characterized in that** service quality data are quantised on a binary or greater than binary basis.

8. The method as in one of the preceding claims,
**characterized in that** service quality data respectively relating to a single terminal device are in each case collated in a central control unit.

9. The method as in one of the preceding claims,
**characterized in that** the service quality data that relate to one part of the communications network are respectively evaluated together in each case.

10. The method as in one of the preceding claims,
**characterized in that**, when the transmission of requested service quality data to a central control unit is not possible at a particular time, especially as a result of a communications fault, the data are stored in the terminal device or in the network, and are transmitted when transmission becomes possible.

11. The method as in one of the preceding claims,
**characterized in that** the user of the terminal device is enabled to request ascertained service quality data, or data based on them, from the terminal device and/or from the central control unit.

12. The method as in one of the preceding claims,
**characterized in that** the capture, at the terminal device, of service quality data is effected **in that** the device itself, and/or components of the communications network, determine the service quality data objectively from a technical viewpoint.

13. The method as in one of the preceding claims,
**characterized in that**, during a communication by the terminal device via the network, the terminal device and/or components of the communications network record processes in the device and/or in the communications network.

14. The method as in one of the preceding claims,
**characterized in that** service quality data are transmitted after a communication.

15. The method as in one of the preceding claims,
**characterized in that** service quality data are processed in conjunction with billing data.

16. The method as in one of the preceding claims,
**characterized in that** service quality data, or data determined on the basis of them, are taken into account when telecommunications charges are being billed.

17. A terminal device for communication within a communications network,
**characterized in that** it has a program for implementing the method as in one of the preceding claims, a memory for the program, and a processor for processing the program.

18. The terminal device as in claim 17,
**characterized in that** it is a mobile phone, in particular a GSM device.

19. The terminal device as in claim 17,
**characterized in that** it has a special key for entering the requested quality of service.

## Revendications

1. Procédé pour déterminer la qualité de service de services de télécommunication dans un réseau de communication (1 ; 2), l'accessibilité au réseau de communication, l'accessibilité au service sélectionné, la qualité vocale, et la probabilité d'interruption de communication étant jugées au niveau d'un terminal (6 ; 9) réalisé pour la communication dans le réseau de communication pour, à chaque fois, une utilisation de service et/ou une tentative d'utilisation de service, et la qualité de ces données de qualité de service représentant des paramètres de qualité de service étant transmise à une centrale (10) du réseau de communication (1 ; 2),
**caractérisé en ce que** des données de qualité de service déterminées de façon subjective par l'utilisateur du terminal peuvent être entrées au niveau du terminal.

2. Procédé selon la revendication 1,
**caractérisé en ce que** le réseau de communication est un réseau de téléphonie mobile et **en ce que** le terminal est un téléphone mobile.

3. Procédé selon une des revendications précédentes,
**caractérisé en ce qu'**une utilisation de service comporte une communication, en particulier une communication téléphonique, par l'intermédiaire du réseau de communication.

4. Procédé selon une des revendications précédentes,
**caractérisé en ce que** la transmission de données de qualité de service est effectuée par un canal de communication spécial.

5. Procédé selon une des revendications précédentes,
**caractérisé en ce que** la transmission est effectuée par message court, en particulier GSM-SMS.

6. Procédé selon une des revendications précédentes,
**caractérisé en ce que** des données transmises de qualité de service sont reçues et exploitées dans une centrale.

7. Procédé selon une des revendications précédentes,
**caractérisé en ce que** des données de qualité de service sont quantifiées de façon binaire ou plus que binaire.

8. Procédé selon une des revendications précédentes,
**caractérisé en ce que** des données de qualité de service se rapportant à chaque fois à un terminal sont rassemblées dans une centrale.

9. Procédé selon une des revendications précédentes,
**caractérisé en ce que** les données de qualité de service se rapportant à une partie du réseau de communication sont exploitées à chaque fois en commun.

10. Procédé selon une des revendications précédentes,
**caractérisé en ce que**, lorsque la transmission de données appelées de qualité de service à une centrale n'est effectivement pas possible en particulier en raison d'un problème de communication, celles-ci sont mémorisées dans le terminal ou dans le réseau de communication et sont transmises quand leur transmission est possible.

11. Procédé selon une des revendications précédentes,
**caractérisé en ce que** l'appel de données déterminées de qualité de service ou de données basées sur celles-ci est possible à partir du terminal et/ou à partir de la centrale pour l'utilisateur du terminal.

12. Procédé selon une des revendications précédentes,
**caractérisé en ce que** la détection, du côté du terminal, de données de qualité de service est effectuée **en ce que** le terminal lui-même et/ou des composants du réseau de communication déterminent de façon techniquement objective les données de qualité de service.

13. Procédé selon la revendication 12,
**caractérisé en ce que** le terminal et/ou des composants du réseau de communication déterminent pendant une communication du terminal, via le réseau de communication, des processus dans le terminal et/ou dans le réseau de communication.

14. Procédé selon une des revendications précédentes,
**caractérisé en ce que** des données de qualité de service sont transmises après une communication.

15. Procédé selon une des revendications précédentes,
**caractérisé en ce que** des données de qualité de service sont traitées en même temps que des données de règlement.

16. Procédé selon une des revendications précédentes,
**caractérisé en ce que** des données de qualité de service ou des données détectées sur la base de celles-ci sont prises en compte lors du calcul des coûts de télécommunication.

17. Terminal pour la communication dans un réseau de communication,
**caractérisé en ce qu'**il présente un programme pour la mise en oeuvre du procédé selon une des revendications précédentes, une mémoire pour le programme, et un processeur pour la mise en oeuvre du programme.

18. Terminal selon la revendication 17,
**caractérisé en ce qu'**il s'agit d'un téléphone mobile, en particulier d'un appareil GSM.

19. Terminal selon la revendication 17,
**caractérisé en ce qu'**il présente une touche spéciale pour l'entrée de la qualité de service appelée.
